# FASCICULE DE BREVET EUROPEEN

(11) **EP 1 101 149 B1**
(45) Date de publication et mention de la délivrance du brevet: **23.10.2002**
(21) Numéro de dépôt: 99932961.8
(22) Date de dépôt: 23.07.1999
(51) Int. Cl.: G02F 1/1335

(54) **AMELIORATION DE L'ANGLE DE VUE D'UN ECRAN LCD PAR NOUVEL EMPILEMENT DE FILMS BIREFRINGENTS**
VERBESSERUNG DES BLICKWINKELS EINES LCD-BILDSCHIRMS DURCH EINE NEUARTIGE SCHICHTUNG DOPPELBRECHENDER FILME
IMPROVING THE ANGLE OF VIEW OF A LCD SCREEN BY NOVEL BIREFRINGENT FILM STACKING

(30) Priorité: 28.07.1998 FR 9809646
(43) Date de publication de la demande: 23.05.2001
(73) Titulaire: THALES AVIONICS S.A., 78141 Vélizy Villacoublay Cédex (FR)
(72) Inventeur: GEORGES, Laurent, Thomson-CSF Prop. Int. Dépt. Br., 94117 Arcueil Cedex (FR); BIGNOLLES, Laurent, Thomson-CSF Pro. Int. Dpt. Br., 94117 Arcueil Cedex (FR)
(74) Mandataire: Lucas, Laurent Jacques
(86) Numéro de dépôt international: FR9901816
(87) Numéro de publication internationale: WO00007067

(56) Documents cités:
- EP-A- 0 646 829
- EP-A- 0 676 660
- EP-A- 0 838 713
- EP-A- 0 855 612
- FR-A- 2 754 609
- US-A- 5 528 400

## Description

La présente invention concerne les dispositifs d'affichage électrooptiques modulant la lumière les traversants et plus précisément les panneaux à cristaux liquides.

Ces panneaux présentent des caractéristiques intéressantes pour réaliser des écrans d'affichage en avionique : ils sont moins encombrants que les écrans classiques à tube cathodique et ils consomment peu d'énergie.

Sur un panneau à cristaux liquides, une image est affichée à l'aide de points élémentaires colorés, ou noirs, juxtaposés. Un point élémentaire correspond à la lumière transmise à sa face avant par une cellule à cristal liquide éclairée sur sa face arrière. De l'arrière à l'avant, une cellule à cristal liquide comporte généralement un empilement d'un polariseur, d'un premier substrat transparent, d'une mince couche de cristal liquide, d'un second substrat transparent et d'un analyseur.

Ces substrats transparents comportent des électrodes également transparentes dont la mise sous tension permet de soumettre les molécules de cristal liquide à un champ électrique perpendiculaire au plan de la cellule.

Et une molécule de cristal liquide présente deux caractéristiques remarquables ; elle peut modifier, en fonction de son orientation spatiale, la polarisation d'une lumière la traversant d'une part et un champ électrique peut changer son orientation d'autre part.

Ainsi le repos (tension nulle) et la mise sous tension de la couche de cristal liquide conduisent à deux arrangements distincts des molécules de cristal liquide dans la couche définissant deux états (état activé et état non activé) de la cellule tels que par exemple dans l'un la cellule laisse passer la lumière et dans l'autre elle l'absorbe. Selon son état la cellule permet d'afficher un point blanc ou un point noir. Des gris sont réalisables avec des tensions intermédiaires qui imposent d'autres orientations aux molécules de cristal liquide. De plus un filtre de couleur inséré dans l'empilement d'une cellule permet la présentation d'un point coloré. Cette technologie permet l'affichage d'images en noir et blanc ou en couleurs.

Cependant avec un panneau à cristaux liquides, l'image perçue dépend de l'angle de vue sous lequel le panneau est observé. Une image de bonne qualité perçue par l'observateur lorsqu'il place son regard selon la direction normale au plan du panneau est déformée lorsqu'il incline la direction de son regard par rapport à cette direction normale. Ce qui réduit généralement l'exploitation d'un panneau à cristaux liquides aux directions d'observations s'écartant peu de la normale au panneau : le panneau présente un angle de vue restreint.

Pour un écran d'affichage qui doit être lisible par un observateur dont la position n'est pas fixe et/ou par plusieurs observateurs placés autour de l'écran, comme par exemple un écran d'une cabine de pilotage d'un avion, la restriction de l'angle de vue du panneau à cristaux liquide est un sérieux inconvénient.

Pour l'utilisateur de l'écran, la couche de cristal liquide présente des défauts de comportement optique. Les défauts sont notamment dus au contraste lumineux entre les états d'une cellule qui présente la particularité gênante d'évoluer avec l'angle d'observation et donc de perturber l'observation du panneau.

Cet effet s'explique par la biréfringence naturelle d'une molécule de cristal liquide selon laquelle la modification par la molécule de la polarisation de la lumière la traversant dépend de l'orientation relative entre cette lumière et la molécule, le changement d'angle d'observation conduit à une modification de la polarisation de la lumière reçue par l'analyseur et donc à une modification de la transmission de la cellule.

L'art antérieur propose des corrections partielles de cette biréfringence dans certaines situations où elle est gênante pour divers types de cellules à cristal liquide.

Nous nous intéressons plus particulièrement aux cellules comportant un cristal liquide nématique en hélice et des polariseurs (un polariseur, un analyseur) croisés entre eux, situés de part et d'autre de la couche de cristal liquide. Dans leur état non activé, ces cellules assurent une forte transmission de la lumière reçue. Leur état activé correspond à une absorption importante de la lumière; une cellule activée observée selon sa normale assure une très faible transmission de lumière. Le défaut principal de ces cellules est, à l'état activé, une augmentation nette de la transmission lumineuse pour une observation inclinée par rapport à la normale à la cellule : un point noir observé perpendiculairement à la cellule s'éclaircit lorsque l'observateur s'éloigne de la normale à la cellule, le contraste entre le blanc et le noir diminue avec cet éloignement par rapport à la normale. Le contraste est le rapport des transmissions de chaque état; c'est le quotient de la transmission de la cellule dans l'état activé par celle dans l'état non activé.

A l'état activé, la biréfringence des molécules de cristal liquide est pénalisante.

L'art antérieur propose de corriger, toujours incomplètement, cette biréfringence par l'ajout de film biréfringent de compensation dans l'empilement de la cellule.

Une première correction connue consiste à utiliser un film biréfringent uniaxe présentant une anisotropie d'indice de réfraction négative dans la direction perpendiculaire au plan de la cellule. Le film est uniaxe négatif d'axe optique extraordinaire normal à la cellule.

Puis des corrections donnant plus de satisfaction ont été développées. Ainsi par exemple le brevet EP 0 646 829 propose un film correcteur biréfringent comportant un support présentant les caractéristiques de la première correction connue sur lequel est polymérisé un cristal liquide discotique orienté par frottement. Il décrit un type T de film biréfringent comportant un empilement de deux milieux uniaxes négatifs présentant chacun un axe optique extraordinaire l'un étant parallèle à la normale à la cellule, l'autre étant incliné par rapport à cette normale d'une part et par rapport au plan de la cellule d'autre part.

Le brevet US 5 528 400 décrit une structure de cellule à cristal liquide comportant une couche de cristal liquide placée entre deux polariseurs ainsi qu'une structure de compensation comprenant deux milieux uniaxes négatifs.

Le problème consiste à élargir encore le champ d'observation d'un panneau à cristaux liquides comportant dans l'empilement de la cellule et de part et d'autre de la couche de cristal de la cellule, au moins deux milieux uniaxes négatifs tels que l'axe extraordinaire de l'un de ces milieux est parallèle à la normale au plan de la cellule et l'axe extraordinaire d'un autre de ces milieux est incliné à la fois par rapport à cette normale et par rapport au plan de la cellule.

Et notamment pour un panneau, comme ceux utilisés par exemple en avionique civile, placé verticalement on cherche à améliorer encore l'angle de vue, en particulier sur l'horizontale.

L'invention propose une nouvelle solution qui consiste à ajouter dans l'empilement de la cellule à cristal liquide un film de compensation biréfringent uniaxe positif aux films biréfringents du type T ci-dessus.

Plus précisément l'invention propose un dispositif d'affichage avec une cellule de cristal liquide comportant une couche de cristal liquide nématique en hélice placée entre deux polariseurs de type croisés et comportant, entre la couche de cristal liquide et au moins un des polariseurs, une structure de compensation des variations de contraste de la cellule en fonction de l'angle d'observation, laquelle structure comporte au moins deux milieux uniaxes négatifs superposés tels que l'axe optique extraordinaire de l'un est parallèle à la normale à la cellule, et celui de l'autre est incliné par rapport à cette normale d'une part et par rapport au plan de la cellule d'autre part, caractérisé en ce que la structure de compensation comporte en outre une couche d'un matériau biréfringent uniaxe positif.

De façon connue, un matériau uniaxe positif peut être compensé par un matériau uniaxe négatif. Et on considère qu'une molécule de cristal liquide se comporte approximativement comme un empilement de matériaux uniaxes positifs. La couche de cristal liquide peut donc raisonnablement être compensée par un empilement de matériaux uniaxes présentant une biréfringence négative, c'est-à-dire de signe opposé à la biréfringence intrinsèque du cristal liquide.

L'art antérieur enseigne une compensation de la biréfringence positive des molécules de la couche de cristal par un empilement particulier de deux matériaux uniaxes négatifs dans un film de type T.

La solution originale de l'invention consiste à améliorer la compensation de la biréfringence positive des molécules de la couche de cristal liquide en complétant l'empilement particulier de l'art antérieur par une couche supplémentaire de matériau dont la biréfringence n'est pas de signe opposé à celle du cristal liquide mais présente comme celui-ci une biréfringence positive.

Le matériau de la couche supplémentaire est un matériau biréfringent uniaxe positif. L'axe extraordinaire de ce matériau est sensiblement parallèle au plan de la couche de cristal liquide. L'axe est dirigé sensiblement perpendiculairement à la direction d'alignement des molécules sur la face la plus proche de la couche de cristal liquide.

Dans l'épaisseur de la cellule, les orientations relatives de la couche de cristal en hélice, de la paire de polariseurs, et des axes optiques extraordinaires du second milieu de la structure de compensation et du matériau de la couche supplémentaire maximisent l'angle de vue du dispositif dans un plan perpendiculaire au plan de la cellule.

La couche supplémentaire est de préférence située entre la couche de cristal liquide et le film de compensation de type T; la couche supplémentaire est située au voisinage immédiat de la couche de cristal liquide.

Dans la couche de cristal liquide les directions d'alignement des molécules sur les faces de la couche sont de préférence perpendiculaires.

De préférence chaque polariseur est croisé avec la direction d'alignement de la face la plus proche de la couche de cristal liquide. Et l'axe extraordinaire du matériau de la couche supplémentaire est croisé avec le polariseur le plus proche.

L'invention permet d'élargir notablement le champ d'observation d'un panneau à cristaux liquides par amélioration du niveau du contraste, sans introduire d'inversion de contraste. Elle permet notamment d'obtenir un écran vertical utilisable avec un très fort angle de vue sur l'horizontale typiquement de plus ou moins 60 degrés et un angle de vue assez important dans la direction verticale, typiquement jusqu'à 40 degrés pour un observateur lisant un panneau placé plus bas que son visage.

L'écran vertical présente à la fois une absence d'inversion de contraste et un contraste supérieur à 40 pour un angle d'observation compris dans une plage angulaire, repérée par rapport à la droite normale à l'écran, entre +60 et -60 degrés sur l'horizontale et entre 0 et 40 degrés sur la verticale au dessus de la droite normale.

D'autres caractéristiques et avantages de l'invention apparaîtront à la lecture de la description qui suit et qui est faite en référence aux dessins annexés dans lesquels :
- la figure 1 représente schématiquement une cellule à cristal liquide dans un configuration connue avec des polariseurs croisés, la figure 1a illustrant l'état non activé de la cellule et la figure 1b illustrant l'état activé de la même cellule;
- la figure 2 représente une cellule de l'art antérieur avec deux structures de compensation optique;
- la figure 3 représente une partie d'un film de compensation de l'art antérieur;
- la figure 4 représente une réalisation de l'invention.

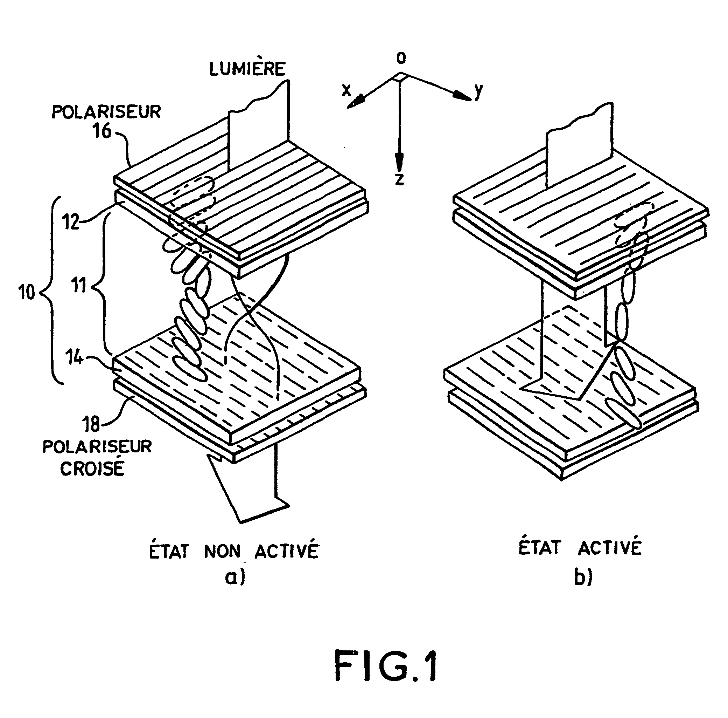

Une cellule à cristal liquide est représentée schématiquement sur la figure 1, elle comporte de façon connue dans l'empilement selon l'axe Oz d'un polariseur 16, d'un premier substrat transparent 12, de molécules 11 de cristal liquide, d'un second substrat transparent 14 et d'un analyseur qui est un polariseur 18 croisé avec le premier polariseur 16. L'ensemble des premier 12 et second 14 substrats et des molécules 11 forme une couche 10 de cristal liquide plane est parallèle au plan Oxy.

Dans le cas d'un cristal liquide nématique en hélice, les molécules de cristal liquide voisines de l'un 12 des deux substrats transparents sont orientées dans une première direction d'alignement par exemple parallèle à l'axe Ox et les molécules voisines de l'autre 14 substrat sont orientées selon une seconde direction d'alignement par exemple parallèle à l'axe Oy. Les première et seconde directions d'alignement sont de préférence perpendiculaires entre elles.

L'alignement peut être obtenu par traitement des faces des substrats 12 et 14 qui sont en contact avec le cristal liquide, par exemple par frottement de la surface dans la direction d'alignement

Lorsque la cellule est au repos, elle est dans l'état non activé illustré par la figure 1a où les molécules 11 de la couche de cristal sont parallèles au plan Oxy de la cellule et forment, à l'aide des directions d'alignement perpendiculaires des substrats, une hélice dans l'épaisseur de la couche 10. La lumière reçue sur la face arrière de la cellule non activée est polarisée rectilignement par le polariseur 16, puis en traversant l'épaisseur de la couche 10 de cristal liquide en hélice, cette polarisation rectiligne est modifiée par la biréfringence des molécules 11 traversées et subit une rotation de 90 degrés due à l'hélice. A la sortie de la couche 10, la lumière est polarisée perpendiculairement au premier polariseur 16, elle peut donc traverser librement le second polariseur croisé 18 dont le sens passant est perpendiculaire à celui du premier polariseur 16. La cellule dans l'état non activé assure une forte transmission de la lumière.

Lorsque la cellule est mise sous tension, elle est dans l'état activé illustré par la figure 1b où un champ électrique perpendiculaire à la couche mince 11 est appliqué entre les électrodes transparentes mises sous tension et portées par les substrats 12 et 14. Les molécules 11 de la couche 10, tendant à s'aligner avec le champ électrique, se redressent par rapport au plan de la cellule et l'hélice précédemment observée est détruite dans l'épaisseur de la couche 10. Dans l'état activé, la lumière traverse aussi la couche 11 mais l'arrangement des molécules qu'elle rencontre tend à lui faire conserver une polarisation rectiligne dans la direction imposée par le polariseur 16. La lumière à la sortie de la couche 10 est absorbée par le second polariseur 18 croisé avec le premier polariseur.

Dans l'état activé, la cellule observée selon la direction perpendiculaire à son plan ne transmet pratiquement pas de lumière. Mais lorsque la direction d'observation est inclinée par rapport à la normale à la cellule, la lumière inclinée est affectée par la biréfringence des molécules qui modifie sa polarisation et une partie de cette lumière traverse alors le second polariseur.

L'arrangement des molécules dans la couche de cristal liquide mise sous tension est assez complexe car la destruction de l'hélice observée au repos n'est que partielle.

Une molécule de cristal liquide est allongée, de manière approchée elle se comporte optiquement comme un milieu biréfringent uniaxe positif dont l'axe extraordinaire est orienté selon la longueur de la molécule. La couche de cristal liquide sous tension peut-être représentée de façon très simplifiée par un empilement de sous-couches dans lesquelles la biréfringence est homogène et les molécules présentent une même orientation. Dans ce modèle de représentation chaque sous-couche est un milieu biréfringent uniaxe positif dont la direction de l'axe extraordinaire caractérise la sous-couche.

D'une manière générale, un premier matériau biréfringent uniaxe est compensé optiquement par un second matériau biréfringent uniaxe de signe opposé tel que les axes extraordinaires des deux matériaux sont parallèles et tels que les biréfringences se compensent. Les matériaux uniaxes négatifs sont donc de bons candidats à la compensation de la biréfringence uniaxe positive des cristaux liquides nématiques.

Le brevet EP 0 646 829 décrit une structure de type T à base de matériaux uniaxes négatifs pour la réalisation d'une compensation optique partielle d'une cellule de cristal liquide. La structure de type T assure une compensation partielle des variations de contraste de la cellule en fonction de l'angle d'observation. Chaque structure de type T est parallèle à un plan, confondu dans l'empilement de la cellule avec le plan de celle-ci, et comporte une première couche d'un matériau biréfringent uniaxe négatif d'axe extraordinaire perpendiculaire à ce plan à laquelle est superposée une seconde couche d'un matériau biréfringent uniaxe négatif d'axe extraordinaire incliné par rapport à ce plan et à la normale à ce plan.

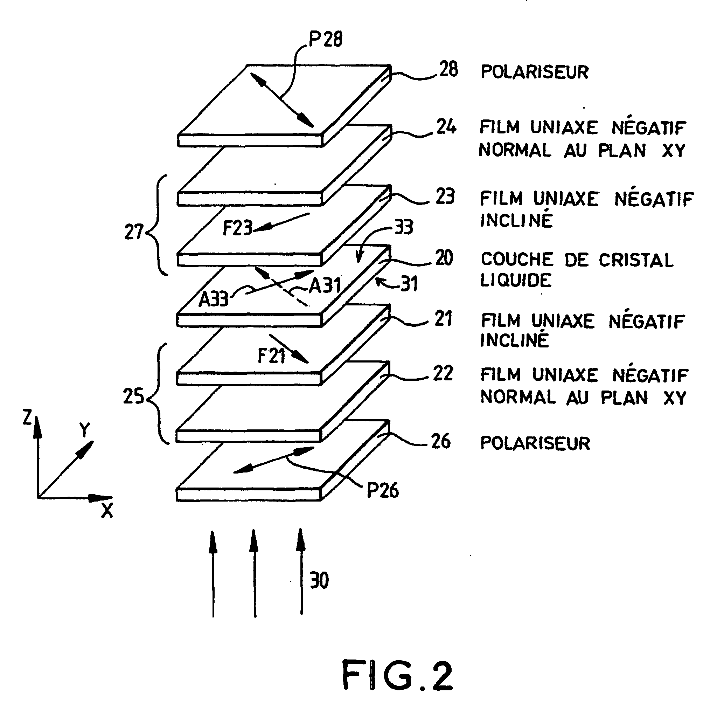

La figure 2 représente suivant l'axe Z l'empilement connu d'une cellule à cristal liquide éclairée sur l'arrière par les rayons lumineux 30 et comportant deux films de compensation optique 25, 27, un de chaque côté de la couche de cristal liquide plane 20, situés entre les deux polariseurs 26 et 28. Le plan de la cellule est le plan XY. Les films arrière 25 et avant 27 sont par exemple du type de ceux décrits dans le brevet EP 0 646 829. Chaque film de type T 25, 27 comporte dans son épaisseur un milieu 22, 24 uniaxe négatif d'axe extraordinaire Z perpendiculaire au plan XY de la cellule et un milieu 21, 23 uniaxe négatif d'axe extraordinaire incliné par rapport à la normale Z à la cellule et par rapport au plan XY de la cellule. Le milieu uniaxe incliné 21, 23 étant le plus proche de la couche 20 de cristal liquide.

Les polariseurs 26, 28 de cette cellule sont croisés, leurs sens passants, respectivement P26 et P28, sont perpendiculaires entre eux. La couche de cristal 20 présente une direction d'alignement A31 des molécules sur sa face arrière 31 dans le plan XY qui est perpendiculaire à celle A33 de la face avant 33, laquelle est également dans le plan XY. La couche de cristal présente au repos une hélice négative dont la torsion est de 90 degrés dans son épaisseur; la torsion est de- 90 degrés selon l'axe orienté Z. Le sens passant P26, P28 de chaque polariseur est croisé avec la direction d'alignement A31, A33 de la face la plus proche de la couche de cristal liquide.

L'orientation de l'axe incliné du milieu 21 uniaxe adjacent à la face 31 arrière de la couche 20 est repérée dans le plan XY par la direction F21 du frottement mis en oeuvre dans la réalisation du film 25 selon le brevet cité. La direction F21 est parallèle à la direction d'alignement A31 des molécules sur la face arrière 31 mais de sens opposé. De même, l'orientation de l'axe incliné du milieu 23 uniaxe adjacent à la face avant 33 de la couche 20 est repérée par la direction F23 parallèle et de sens opposé à l'alignement A33 des molécules de la face avant 33; la direction F23 correspondant au frottement pour la réalisation du film 27 de type T. Les directions F21 et F23 sont perpendiculaires entre elles.

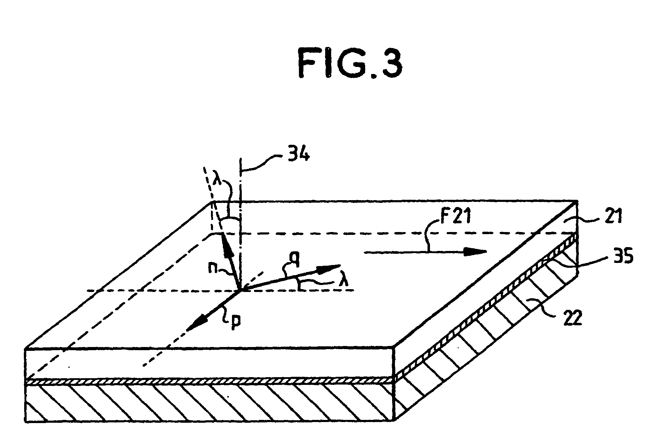

La figure 3 représente une partie du film arrière 25 de compensation déjà illustré par la figure 2; ce film 25 de type T comporte un milieu 22 uniaxe négatif dont l'axe extraordinaire rapide est orienté selon la normale 34 au film et dont la face supérieure 35 a été frottée dans la direction F21, il comporte également un milieu 21 uniaxe négatif dont l'axe extraordinaire n est incliné par rapport à cette normale 34 d'un angle λ dans le plan contenant la normale 34 et la direction de frottement F21. L'ellipsoïde des indices qui caractérise le milieu 21 est de révolution autour de l'axe n qui est l'axe optique ou axe extraordinaire de ce milieu 21. Un axe ordinaire p est à la fois dans le plan XY de la cellule et perpendiculaire à l'axe extraordinaire n, un second axe ordinaire q est perpendiculaire aux axes n et p. Une onde arrivant perpendiculairement au substrat 21 selon la droite 34 voit deux lignes neutres: l'axe lent est l'axe p et l'axe rapide est la projection de l'axe q dans le plan du substrat.

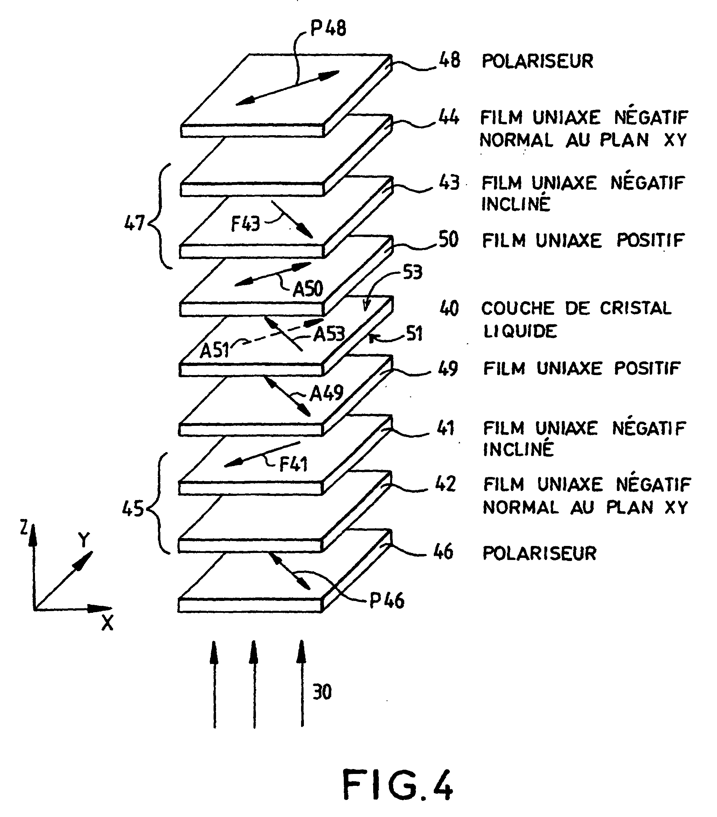

La figure 4 représente une réalisation de l'invention. Dans cette réalisation la cellule à cristal liquide éclairée par l'arrière par des rayons lumineux 30 comporte des éléments empilés dans son épaisseur comme la cellule de l'art antérieur de la figure 2 : une couche de cristal liquide 40 entre deux films de compensation, par exemple de type T, un film 45 à l'arrière et un film 47 à l'avant, l'ensemble étant situé entre deux polariseurs 46 et 48; elle comporte en outre une couche supplémentaire 49, 50 de matériau biréfringent présentant la particularité d'être uniaxe positif, et placée de préférence entre chaque film de compensation 45, 47 et la couche de cristal liquide 40. Le matériau uniaxe positif de chaque couche supplémentaire est orienté de telle sorte que la couche supplémentaire ou, de préférence, la paire de couches supplémentaires améliore l'angle d'observation d'un panneau comportant de telles cellules.

La cellule de la figure 4 s'observe de face dans le sens négatif de l'axe Z normal à la cellule. La cellule selon l'invention comporte successivement entre le polariseur 48 à l'avant et le polariseur 46 à l'arrière, le film de compensation 47, par exemple de type T, comportant un premier matériau 44 uniaxe négatif d'axe parallèle à l'axe Z et un second matériau 43 uniaxe négatif d'axe incliné par rapport à l'axe Z et par rapport au plan XY parallèle au plan de la cellule, l'orientation de second matériau étant donnée dans le plan XY par une direction F43, la couche supplémentaire 50 d'un troisième matériau qui est uniaxe positif, la couche 40 de cristal liquide nématique en hélice présentant une direction d'alignement A53 à l'avant et une direction d'alignement A51 à l'arrière, la couche supplémentaire 49 d'un quatrième matériau uniaxe positif, le film de compensation 45 par exemple de type T comportant un cinquième matériau 41 uniaxe négatif incliné dont l'orientation dans le plan XY est donnée par une direction F41 et un sixième matériau 42 uniaxe négatif d'axe Z.

Les directions d'alignement A53 à l'avant et A51 à l'arrière correspondent au sens de frottement des substrats de la couche de cristal lors de la réalisation de cette couche 40.

Dans l'invention, l'axe extraordinaire A50, A49 du matériau d'une couche supplémentaire 50, 49 est sensiblement dans le plan de la cellule et perpendiculaire à la direction d'alignement A53, A51 de la face la plus proche de la couche de cristal liquide 40.

La figure 4 illustre les sens possibles de l'axe extraordinaire A50, A49, ce qui est important c'est sa direction.

Selon l'invention, l'axe extraordinaire A50, A49 présente une inclinaison comprise entre 0 et 10 degrés par rapport au plan XY de la cellule. Cette inclinaison est comparable à celle des molécules sur les faces avant 53 ou arrière 51 de la couche de cristal liquide; en effet les molécules ne sont pas rigoureusement alignées dans le plan de la cellule selon les directions d'alignements A53 ou A51, elles présentent une légère inclinaison dans un plan perpendiculaire au plan de la cellule et parallèle à la direction d'alignement A53 ou A51.

Dans cette réalisation particulière, la couche 40 de cristal liquide nématique au repos présente dans son épaisseur une hélice dont la torsion est par exemple d'une valeur positive de 90 degrés selon l'axe orienté Z de la figure 4 avec les directions d'alignement A51 et A53 sur les faces avant et arrière de la couche 40 perpendiculaires. Au repos, lorsque le cristal liquide n'est pas activé, les molécules de cristal situées au centre de l'épaisseur de la couche 40 dans un plan parallèle au plan XY sont sensiblement parallèles à l'axe Y. L'axe Y est orienté du bas vers le haut de l'écran comportant des cellules selon l'invention. L'axe Y représente la bissectrice du secteur angulaire compris, dans le sens de rotation de l'hélice de la couche 40 de cristal liquide au repos de la face arrière 51 à la face avant 53, entre la direction d'alignement A51 de la face arrière et la direction d'alignement A53 de la face avant.

Les polariseurs ne sont pas parallèles entre eux, ils sont de type croisés et la cellule absorbe fortement la lumière lorsque le cristal liquide de la couche 40 est mis sous tension. Le sens passant P48, P46 de chaque polariseur 48, 46 est de préférence croisé avec la direction d'alignement A53, A51 de la face 53, 51 la plus proche de la couche de cristal 40. Ces orientations relatives entre un polariseur et la direction d'alignement des molécules de cristal liquide les plus proches présentent l'avantage de limiter les inversions de contraste. Ainsi une zone assez vaste de l'espace d'observation ne présente pas d'inversion de contraste.

Le sens passant P48 du premier polariseur 48 à l'avant de l'empilement de la figure 4 est sensiblement parallèle à la direction d'alignement A51 de la face arrière de la couche de cristal 40.

La direction F43, respectivement F41, est parallèle et de sens opposé à la projection orthogonale dans le plan XY de l'axe extraordinaire incliné du second matériau 43, respectivement cinquième matériau 41, uniaxe négatif. Le second, respectivement sixième, matériau 43, 41, est placé dans l'empilement de telle sorte que la direction F43, F41 soit perpendiculaire au sens passant P48, P46 du polariseur le plus proche et soit de sens sensiblement opposé à celui de la direction d'alignement A53, A51 de la face la plus proche de la couche de cristal 40.

Dans l'épaisseur de la cellule, les orientations relatives de la couche de cristal en hélice, de la paire de polariseurs, et des axes optiques extraordinaires des second 43 et cinquième 41 milieux de la structure de compensation et ceux des matériaux de la paire de couches supplémentaires 49, 50 maximisent l'angle de vue du dispositif dans un plan horizontal XZ qui est perpendiculaire au plan de la cellule et à l'axe Y matérialisant la verticale du dispositif.

La cellule selon l'invention présente de préférence une couche supplémentaire de chaque côté de la couche de cristal liquide 40, ce qui présente l'avantage de réaliser une correction conservant la symétrie droite/gauche par rapport à l'axe Y. L'angle de vue est amélioré en respectant cette symétrie. Des variantes de l'invention peuvent être réalisées avec une couche supplémentaire unique par exemple lorsque l'utilisateur d'un écran vertical selon l'invention est limité dans ses déplacements horizontaux et n'observe l'écran que par un seul côté.

La couche supplémentaire est un matériau uniaxe positif présentant un retard optique très efficace pour la correction des variations de contraste en fonction de l'angle d'observation mais d'une valeur assez faible de 15 à 50 nanomètres égal au produit de l'épaisseur de la couche par la différence des indices optiques de l'axe extraordinaire et des axes ordinaires. L'épaisseur de la couche est de préférence d'environ un micron.

La couche supplémentaire de matériau uniaxe positif est par exemple réalisée par un substrat frotté sur lequel une couche de cristal liquide est déposée puis polymérisée. Le substrat frotté peut être composé d'un substrat neutre comme du verre sur lequel une couche de polyimide est appliquée, cette couche est frottée mécaniquement de façon connue. Le procédé de fabrication des faces de la couche de cristal liquide en hélice peut être repris, les inclinaisons, par rapport au plan de la cellule, de l'axe extraordinaire du matériau de la couche supplémentaire et des molécules alignées sur chaque face de la couche de cristal sont comparables.

L'observation d'un panneau comportant des cellules selon l'invention est bonne pour les angles d'observation compris dans une plage étendue autour de la normale au panneau: dans cett plage angulaire, l'observateur ne perçoit pas d'inversion de contraste, et le contraste présente une valeur supérieure à une valeur minimale de 40 acceptable pour le confort visuel. Le contraste est le quotient de la transmission d'une cellule à l'état activé par celle à l'état non activé.

Pour un panneau vertical dont l'axe Y de la figure 4 est orienté du bas vers le haut du panneau, l'invention permet d'élargir la plage d'angles de vue horizontaux assurant une bonne lisibilité du panneau placé en dessous du niveau du regard de l'utilisateur. Et notamment un contraste au moins égal à 40 est obtenu pour un angle de vue dans une plage angulaire, repérée par rapport à la droite normale à l'écran, entre +60 et -60 degrés sur l'horizontale et entre 0 et 40 degrés sur la verticale au dessus de la droite normale.

Dans une variante de réalisation, la couche de cristal liquide présente au repos une hélice négative selon l'axe Z comme la cellule connue illustrée par la figure 2. L'amélioration de la compensation est obtenue en ajoutant de part et d'autre de la couche de cristal liquide, une couche supplémentaire de matériau uniaxe positif dont l'axe est, comme dans la réalisation de la figure 4, parallèle au sens passant du polariseur le plus proche.

## Revendications

1. Dispositif d'affichage avec une cellule de cristal liquide comportant une couche de cristal liquide (40) nématique en hélice placée entre deux polariseurs de type croisés (46, 48) et comportant, entre la couche de cristal liquide et au moins un des polariseurs, une structure de compensation des variations de contraste de la cellule en fonction de l'angle d'observation, laquelle structure comporte au moins deux milieux uniaxes négatifs superposés tels que l'axe optique extraordinaire de l'un (44, 42) est parallèle à la normale à la cellule, et celui de l'autre (43, 41) est incliné par rapport à cette normale d'une part et par rapport au plan de la cellule d'autre part, **caractérisé en ce que** la structure de compensation comporte une couche supplémentaire (50, 49) d'un matériau biréfringent uniaxe positif.

2. Dispositif selon la revendication 1, **caractérisé en ce que** le matériau uniaxe positif est orienté de telle sorte que la couche supplémentaire améliore l'angle d'observation d'un panneau comportant de telles cellules en maximisant l'angle de vue dans un plan perpendiculaire à un panneau comportant de telles cellules.

3. Dispositif selon l'une des revendications précédentes, **caractérisé en ce que** l'axe extraordinaire (A50, A49) du matériau uniaxe positif de la couche supplémentaire est parallèle au plan (XY) de la cellule et perpendiculaire à la direction d'alignement (A53, A51) des molécules de cristal liquide de la face (53, 49) la plus proche de la couche de cristal liquide (40).

4. Dispositif selon l'une des revendications précédentes, **caractérisé en ce que** la couche supplémentaire (50, 49) est située entre les milieux uniaxes négatifs (41, 42 ;43, 44) et la couche de cristal liquide (40).

5. Dispositif selon l'une des revendications précédentes, **caractérisé en ce qu'**il comporte deux structures (44, 43 et 50), (49, 41 et 42) de compensation situées entre les polariseurs (48, 46) et de part et d'autre de la couche de cristal liquide (40) et comportant chacune une couche supplémentaire (50, 49).

6. Dispositif selon l'une des revendications précédentes, **caractérisé en ce que** l'hélice que forment les molécules de la couche de cristal liquide (40) au repos présente une torsion de 90 degrés.

7. Dispositif selon l'une des revendications 1 et 2, **caractérisé en ce que** chaque polariseur (48, 46) est croisé avec la direction d'alignement (A53, A51) de la face la plus proche de la couche de cristal liquide (40) et l'axe extraordinaire du matériau de la couché supplémentaire (50, 49) est croisé avec le polariseur le plus proche (48, 46).

8. Dispositif selon l'une des revendications précédentes, **caractérisé en ce que** l'inclinaison de l'axe extraordinaire du matériau de la couche supplémentaire par rapport au plan de la cellule est inférieur à 10 degrés.

9. Dispositif selon l'une des revendications précédentes, **caractérisé en ce que** le retard optique introduit par la couche supplémentaire est compris entre 15 et 50 nanomètres.

## Patentansprüche

1. Anzeigevorrichtung mit einer Flüssigkristallzelle, die eine spiralförmig nematische Flüssigkristallschicht (40) zwischen zwei Polarisatoren (46, 48) in gekreuzter Lage sowie zwischen der Flüssigkristallschicht und mindestens einem der Polarisatoren eine Struktur zur Kompensation der Kontrastschwankungen der Zelle abhängig vom Betrachtungswinkel enthält, wobei diese Struktur mindestens zwei übereinanderliegende einachsig negative Milieus enthält derart, daß die außerordentliche Achse eines der Milieus (44, 42) parallel zur Senkrechten auf der Zelle verläuft und die des anderen Milieus (43, 41) einerseits bezüglich dieser Senkrechten und andrerseits bezüglich der Ebene der Zelle geneigt verläuft, **dadurch gekennzeichnet, daß** die Kompensationsstruktur eine zusätzliche Schicht (50, 49) aus einem doppelt brechenden einachsig positiven Material enthält.

2. Vorrichtung nach Anspruch 1, **dadurch gekennzeichnet, daß** das einachsig positive Material so ausgerichtet ist, daß die zusätzliche Schicht den Betrachtungswinkel eines Bildschirms mit solchen Zellen verbessert, indem der Betrachtungswinkel in einer Ebene senkrecht zu einem solche Zellen enthaltenden Bildschirm vergrößert wird.

3. Vorrichtung nach einem der vorstehenden Ansprüche, **dadurch gekennzeichnet, daß** die außerordentliche Achse (A50, A49) des einachsig positiven Materials der zusätzlichen Schicht parallel zur Ebene (XY) der Zelle und senkrecht zur Ausrichtung (A53, A51) der Flüssigkristall-Moleküle an der nächstliegenden Oberfläche (53, 49) der Flüssigkristallschicht (40) verläuft.

4. Vorrichtung nach einem der vorstehenden Ansprüche, **dadurch gekennzeichnet, daß** die zusätzliche Schicht (50, 49) zwischen den einachsig negativen Milieus (41, 42; 43, 44) und der Flüssigkristallschicht (40) angeordnet ist.

5. Vorrichtung nach einem der vorstehenden Ansprüche, **dadurch gekennzeichnet, daß** sie zwei Kompensationsstrukturen (44, 43 und 50; 49, 41 und 42) enthält, die zwischen den Polarisatoren (48, 46) und zu beiden Seiten der Flüssigkristallschicht (40) liegen und je eine zusätzliche Schicht (50, 49) enthalten.

6. Vorrichtung nach einem der vorstehenden Ansprüche, **dadurch gekennzeichnet, daß** die Spirale, die die Moleküle der Flüssigkristallschicht (40) im Ruhezustand bilden, eine Drehung von 90° umfaßt.

7. Vorrichtung nach einem der Ansprüche 1 und 2, **dadurch gekennzeichnet, daß** jeder Polarisator (48, 46) gekreuzt bezüglich der Ausrichtung (A53, A51) der Flüssigkristallschicht (40) an deren nächstliegender Oberfläche angeordnet ist, während die außerordentliche Achse des Materials der zusätzlichen Schicht (50, 49) bezüglich des nächstliegenden Polarisators (48, 46) gekreuzt angeordnet ist.

8. Vorrichtung nach einem der vorstehenden Ansprüche, **dadurch gekennzeichnet, daß** die Neigung der außerordentlichen Achse des Materials der zusätzlichen Schicht bezüglich der Oberflächen der Zelle kleiner als 10° ist.

9. Vorrichtung nach einem der vorstehenden Ansprüche, **dadurch gekennzeichnet, daß** die optische Verzögerung aufgrund der zusätzlichen Schicht zwischen 15 und 50 nm beträgt.

## Claims

1. Display device with a liquid-crystal cell comprising a twisted nematic liquid-crystal layer (40) placed between two crossed polarizers (46, 48) and comprising, between the liquid-crystal layer and at least one of the polarizers, a structure for compensating for the variations in contrast of the cell according to the angle of observation, which structure comprises at least two superposed negative uniaxial media such that the extraordinary optical axis of one medium (44, 42) is parallel to the normal to the cell and that of the other medium (43, 41) is inclined with respect to this normal on the one hand and with respect to the plane of the cell on the other, **characterized in that** the compensating structure includes an additional layer (50, 49) of a positive uniaxial birefringent material.

2. Device according to Claim 1, **characterized in that** the positive uniaxial material is oriented in such a way that the additional layer improves the angle of observation of a panel comprising such cells by maximizing the viewing angle in a plane perpendicular to a panel comprising such cells.

3. Device according to either of the preceding claims, **characterized in that** the extraordinary axis (A50, A49) of the positive uniaxial material of the additional layer is parallel to the plane (XY) of the cell and perpendicular to the direction of alignment (A53, A51) of the liquid-crystal molecules of the face (53, 49) closest to the liquid-crystal layer (40).

4. Device according to one of the preceding claims, **characterized in that** the additional layer (50, 49) lies between the negative uniaxial media (41, 42; 43, 44) and the liquid-crystal layer (40).

5. Device according to one of the preceding claims, **characterized in that** it comprises two compensating structures (44, 43 and 50), (49, 41 and 42) lying between the polarizers (48, 46) and on each side of the liquid-crystal layer (40), each structure including an additional layer (50, 49).

6. Device according to one of the preceding claims, **characterized in that** the helix which the molecules of the liquid-crystal layer (40) at rest form has a twist of 90 degrees.

7. Device according to either of Claims 1 and 2, **characterized in that** each polarizer (48, 46) is crossed with the alignment direction (A53, A51) of the face closest to the liquid-crystal layer (40) and the extraordinary axis of the material of the additional layer (50, 49) is crossed with the closest polarizer (48, 46).

8. Device according to one of the preceding claims, **characterized in that** the inclination of the extraordinary axis of the material of the additional layer with respect to the plane of the cell is less than 10 degrees.

9. Device according to one of the preceding claims, **characterized in that** the optical retardation introduced by the additional layer is between 15 and 50 nanometres.
